(19) Europäisches Patentamt
European Patent Office
Office européen des brevets

(11) **EP 4 779 189 A1**

(12) **EUROPEAN PATENT APPLICATION**
published in accordance with Art. 153(4) EPC

(43) Date of publication:
**22.07.2026  Bulletin 2026/30**

(21) Application number: **24864954.3**

(22) Date of filing: **05.01.2024**

(51) International Patent Classification (IPC):
**F16L 11/10** (2006.01)    **A01J 5/00** (2006.01)
**B32B 1/08** (2006.01)    **B32B 25/20** (2006.01)

(52) Cooperative Patent Classification (CPC):
**A01J 7/00; A01J 5/00; B32B 1/08; B32B 25/20;
F16L 11/08; F16L 11/081; F16L 11/085;
F16L 11/088; F16L 11/10**

(86) International application number:
**PCT/JP2024/000045**

(87) International publication number:
**WO 2025/057443 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.09.2023  JP 2023147273**

(71) Applicant: **Toyox Co., Ltd.
Kurobe-shi
Toyama 938-8585 (JP)**

(72) Inventor: **YONEDA Kazuya
Kurobe-shi, Toyama 938-8585 (JP)**

(74) Representative: **Gill Jennings & Every LLP
The Broadgate Tower
20 Primrose Street
London EC2A 2ES (GB)**

(54) **SILICONE RUBBER HOSE**

(57)  [Problem] Provided is a silicone rubber hose having excellent kink resistance and heat resistance and good flexibility.

[Solution] The silicone rubber hose H1 has excellent stretchability and a reinforcement material wound between the inner layer 1 and the outer layer 2, wherein the durometer A hardness of a silicone rubber to form the inner layer 1 is 55 to 85, the durometer A hardness of a silicone rubber to form the outer layer 2 is 35 to 65, the silicone rubber to form the inner layer 1 or the outer layer 2 has a tear strength (Sa) of 5 to 60 N/mm measured in accordance with JIS-K-6252, and the ratio of the viscoelastic recovery rate defined by the following formula (1) and the permanent strain rate defined by the following formula (2) (viscoelastic recovery rate /permanent strain rate) is 2.2 or more in the silicone rubber to form the outer layer 2: viscoelastic recovery rate = {(elongation deformation amount - stress residual deformation recovery amount - residual strain amount)/elongation deformation amount} x 100 ⋯ (1) and permanent strain rate = (residual strain amount/elongation deformation amount) x 100 ⋯ (2).

Fig. 1

**Description**

TECHNICAL FIELD

The present invention relates to a silicone rubber hose, which has excellent kink resistance and heat resistance and good flexibility, and is used in e.g. food, beverage, medical equipment, chemical and other industries. The present invention particularly relates to a milking hose.

BACKGROUND ART

Tubes and hoses used in the medical field, food industry field, industrial parts field and the like are required to have flexibility and kink resistance, and tubes and hoses including a vinyl chloride resin have been used in the past. In recent years, however, tubes and hoses including a silicone rubber instead of a vinyl chloride resin have been developed due to increasing interest in environmental issues (Patent Literature 1).

From its use in milking operations, a pliable milking hose has been used for a milking device, which is used in milking operations to milk e.g. cows. The milking hose is used between a milking head attached to e.g. the udder of a cow and the main body of a milking device to collect milk by a suction power, and used for e.g. pipes inside the main body of a milking device. In order that work efficiency will be increased and burdens will not be placed on the udder when the milking hose is used between the milking head and the main body of a milking device, the milking hose is required to have pliability. The milking hose is also required to have kink resistance.

As the milking hose, typically, thick tubes formed using e.g. a silicone rubber and tubes formed using a soft resin are known. These tubes are in a solid cylindrical shape. Patent Literature 2, for example, discloses a resin composition containing an amorphous $\alpha$-olefin-based polymer and a petroleum resin, and a tube formed using the resin composition, and discloses that the tube has excellent kink resistance and heat resistance and can be used for milking purposes. Additionally, Patent Literature 3 discloses a multilayer tube, in which layers each including a linear low density polyethylene resin having different moduli and a polyolefin-based elastomer layer are laminated, and discloses that the tube suppresses the dissolution of material components, is flexible and can be used for milking purposes.

CITATION LIST

PATENT LITERATURE

Patent Literature 1: Japanese Unexamined Patent Application Publication No. 2010-54052
Patent Literature 2: Japanese Unexamined Patent Application Publication No. 2004-285299
Patent Literature 3: Japanese Unexamined Patent Application Publication No. 2001-317662

SUMMARY OF INVENTION

TECHNICAL PROBLEM

Especially from the milking point of view, a heavy milking hose is undesirable because it is not only difficult to handle during milking, but also puts a strain on the udder of the cow or other animal. That is, it is essential for the milking hose to be lightweight. The tubular (solid cylindrical) milking tubes as described in the above patent literatures are required to have a relatively large thickness in order that kinks will not be easily caused when they are bent, and thus it is difficult to produce a light hose. Additionally, because an attempt to automate milking operations has proceeded, when the milking hose is easily damaged, the milking operations cannot be performed and the health of e.g. cows may be easily harmed. Therefore, a milking hose having a longer life has been demanded.

In a case where silicone rubbers for the inner layer and the outer layer in conventional reinforced silicone hoses are soft because of easy handling, when a tensile force acts in the axial direction of the reinforced silicone hose and when the whole hose is expanded with changes in the internal pressure, the inner layer and the outer layer are stretched in the axial direction. However, the expansion rate of a material for a reinforcement material is significantly lower than that of the silicone rubbers, and moreover the silicone rubbers have higher release and lubricating properties, and thus the reinforcement material easily moves compared to other rubbers and structural resins. Therefore, there is a problem in that every time when the reinforced silicone hose is stretched, the reinforcement material gradually moves from the end in the axial direction of the reinforced silicone hose, causing detachment. This detachment significantly reduces the pressure resistance performance of the detached area.

Furthermore, in the connection structure of the reinforced silicone hoses, the pressure resistance performance of a connection end placed on the end in the axial direction of the reinforced silicone hoses is significantly lowered with the above-described detachment of the reinforcement material, and thus the part between the connection end and a connecting fitting easily bursts due to the detachment of the reinforcement material. In this case, there is a problem in that the connecting fitting has to be also discarded together with the burst hose, and high costs are required for hose replacement. Therefore, it is considered that in order to prevent the reinforcement material from detachment, the connection end of the reinforced hose is fit on the circumferential surface of a nipple, and the outside thereof is tightly fastened with a fastening component to reduce the diameter thereof and thereby the reinforcement material is held not to move.

In this case, however, the silicone rubber held between the fastening component and the nipple is pushed out due to strong fastening with the fastening component to form a difference in level between the inner surface of the nipple and the inner surface of the hose. There are therefore problems in that fluid flowing in the hose remains in the formed difference in level and resistance in the tube increases. In addition, as a method for preventing the detachment of the reinforcement material, it is also thought to increase adhesive properties between the inner layer and the outer layer, for example, by applying a silicone rubber-based primer to the surface of the reinforcement material; however, there is a problem in that costs increase.

The tubes and reinforced silicone hoses by conventional techniques have not sufficiently satisfied kink resistance and heat resistance. In view of such circumstances, the problem to be solved by the present invention is to provide a hose having excellent kink resistance and heat resistance and good flexibility. This is particularly preferably a milking hose. Furthermore, the problems are to prevent the detachment of a reinforcement material, to prevent, by increasing the rigidity of a silicone rubber hose against a twist, collapse of the silicone rubber hose due to the twist, and to prevent, even in a silicone rubber hose formed using a silicone rubber having excellent flexibility, a tear in the connection end of the hose by a simple structure.

SOLUTION TO PROBLEM

As a result of repeated diligent investigations, the present inventors found that the above problems could be solved by the silicone rubber hose of the present invention. The silicone rubber hose of the present invention is a silicone rubber hose, which is produced using silicone rubbers having excellent stretchability and has a reinforcement material wound between the inner layer and the outer layer, wherein the durometer A hardness of a silicone rubber to form the inner layer is 55 to 85, the durometer A hardness of a silicone rubber to form the outer layer is 35 to 65, at least one of the silicone rubber to form the inner layer or the silicone rubber to form the outer layer has a tear strength (Sa) of 5 to 60 N/mm measured in accordance with JIS-K-6252, and the ratio of the viscoelastic recovery rate defined by the following formula (1) and the permanent strain rate defined by the following formula (2) (viscoelastic recovery rate/permanent strain rate) is 2.2 or more in the silicone rubber to form the outer layer:

Viscoelastic recovery rate = { (elongation deformation amount - stress residual deformation recovery amount - residual strain amount)/elongation deformation amount} $\times$ 100  (1),

and

Permanent strain rate = (residual strain amount/elongation deformation amount) $\times$ 100  (2).

ADVANTAGEOUS EFFECT OF INVENTION

According to the present invention, it is possible to provide a silicone rubber hose having excellent kink resistance and heat resistance and good flexibility.

BRIEF DESCRIPTION OF DRAWING

Fig. 1 is a front view of the silicone rubber hose according to the first embodiment of the present invention, which is partly cut.

Fig. 2 is a front view of the silicone rubber hose according to the second embodiment of the present invention, which is partly cut.

DESCRIPTION OF EMBODIMENT

(First embodiment)

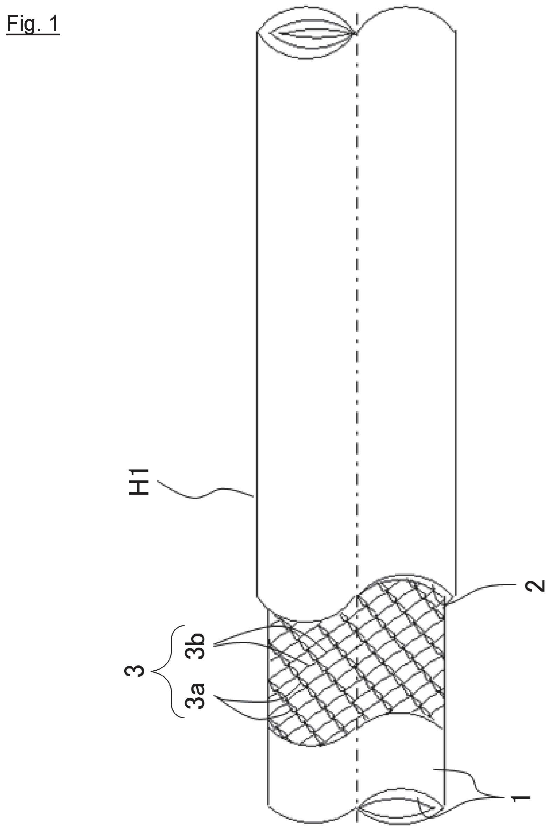

The first embodiment of the present invention will now be described with reference to Fig.1. The silicone rubber hose H1 according to the first embodiment of the present invention (see Fig. 1) is produced using silicone rubbers having excellent stretchability, wherein the durometer A hardness of a silicone rubber to form the inner layer 1 is 55 to 85, the durometer A hardness of a silicone rubber to form the outer layer 2 is 35 to 65, and at least one of the silicone rubber to form the inner layer 1 or the silicone rubber to form the outer layer 2 has a tear strength (Sa) of 5 to 60 N/mm measured in accordance with JIS-K-6252. The durometer A hardness of the silicone rubber was measured in accordance with JIS-K-6253, which is based on a pre-cured millable silicone rubber cured for 2 hours at 200°C.

When the hardness of the silicone rubbers is within the ranges, a silicone rubber hose can be obtained having high kink resistance and flexibility which is not much worse. When the lower limit of the durometer A hardness of the silicone rubber to form the inner layer 1 is less than 55, kink resistance is low, and when the upper limit of the durometer A hardness of the silicone rubber to form the outer layer 2 is above 65, bending load required is high. In both the cases, a pliable silicone rubber hose H1 cannot be realized. In addition, when the lower limit of the durometer A hardness of the silicone rubber to form the outer layer 2 is less than 35, flexibility is good but kinks are easily caused, and when the upper limit of the durometer A hardness of the silicone rubber to form the inner layer 1 is above 85, hardness increases and usability is poor like metal flexible tubes.

In the silicone rubber to form the outer layer 2 in the silicone rubber hose H1 of the present embodiment, the ratio of the viscoelastic recovery rate defined by the following formula (1) and the permanent strain rate defined by the following formula (2) (viscoelastic recovery rate /permanent strain rate) is 2.2 or more, preferably 2.25 or more, more preferably 2.3 or more and further preferably 2.5 or more. When the value is too low, the kink resistance of the silicone rubber may become worse:

$$\text{Viscoelastic recovery rate} = \{ \text{(elongation deformation amount - stress residual deformation recovery amount - residual strain amount)} / \text{elongation deformation amount}\} \times 100 \quad (1)$$

and

$$\text{Permanent strain rate} = \text{(residual strain amount/elongation deformation amount)} \times 100 \quad (2).$$

In addition, the silicone rubber hose H1 of the present embodiment is firmly fastened by a fastening component to reduce the diameter thereof and is connected to a joint as one aspect thereof. In a case where the hose is connected to a joint in this way, however, when the above-described ratio of the viscoelastic recovery rate defined by the following formula (1) and the permanent strain rate defined by the following formula (2) is too low, a force to recover the silicone rubber from the deformation is weak, and thus a force to fix the reinforcement material is poor. Therefore, there is a risk that the reinforcement material may come out.

In the above formula (1) and formula (2), the elongation deformation amount, stress residual deformation recovery amount and residual strain amount are values obtained by the elastic hysteresis test of a resin composition. The elongation deformation amount represents, when a silicone rubber is elongated to a predetermined length (state I), the deformation length of the silicone rubber. The stress residual deformation recovery amount represents, when tensile load is gradually reduced from the state I to zero (state II), the amount of change in the deformation length of the silicone rubber from the state I to the state II. The residual strain represents the deformation length of the silicone rubber when the silicone rubber is left to stand in a free state for a certain time after the state II (state III).

The elastic hysteresis test of a silicone rubber is performed by the following method:

(1) a pre-cured millable silicone rubber is press-formed at 160°C and then cured under an environment of 200°C for 2 hours to produce a sheet with a thickness 0.5 mm,
(2) a type 1 dumb-bell specimen (gauge length = 40 mm) is produced from the sheet in accordance with JIS-K-6251,
(3) the specimen is subjected to the operations of (i) to (iv) below at a temperature of 23°C using a tensile tester (Strograph R manufactured by TOYO SEIKI SEISAKU-SHO, LTD.),
(4) (i) the specimen is extended at a crosshead speed of 500 mm/min to an elongation deformation rate of 100% (gauge length: 80 mm) (elongation deformation amount = 40 mm),
(5) (ii) the specimen is contracted immediately after the extension at a crosshead speed of 500 mm/min to a tensile stress of 0,
(6) (iii) the gauge length is measured when the tensile stress is 0, a difference between the length and a gauge length of 80 mm at an elongation deformation rate of 100% is found, and this value is regarded as the stress residual deformation recovery amount, and

(7) (iv) the specimen with a tensile stress of 0 is left to stand at a temperature 23°C in a free state for 5 minutes immediately after the tensile stress becomes 0, and the gauge length is measured. A difference between the length and a gauge length of 40 mm before the test is found, and this value is regarded as the residual strain amount.

The silicone rubber hose H1 of the present embodiment can be used for various formed products because of excellent heat resistance and kink resistance.

In a silicone rubber used for the inner layer 1 or the outer layer 2 to produce the silicone rubber hose H1 of the present embodiment, a pre-cured millable silicone rubber is press-formed at 160°C and then cured under an environment of 200°C for 2 hours, and the cured product has a tear strength of 5 to 60 N/mm and preferably 15 to 60 N/mm (measured in accordance with JIS-K-6252). A tear strength of less than 5 N/mm is not preferred. This is because deformation is not recovered when the hose is bent and elongated, leading to dimension deviation, and thus the thickness thereof is changed and handling is not easy. Additionally, there is concern that the hose is teared starting from a point where the thickness is changed. Furthermore, a tear strength of above 60 N/mm is not preferred because the hose is not easily deformed and handled and impact resilience largely reduces working efficiency when the hose is used in a bent state.

Furthermore, when the silicone rubbers used to produce the silicone rubber hose H1 of the present embodiment meet the following formula (3), flexibility and kink resistance are more excellent. In a case where the durometer A hardness of the silicone rubber to form the inner layer 1 is greater than the durometer A hardness of the silicone rubber to form the outer layer 2, when the silicone rubber hose H1 is used in a bent state, the inner layer 1 with relatively greater hardness retains the shape of the silicone rubber hose H1, and simultaneously the outer layer 2 with lower hardness is pliably deformed, and flexibility and kink resistance are improved as the silicone rubber hose H1. The durometer A hardness of the silicone rubber to form the inner layer 1 is greater by preferably 10 or more and more preferably 15 or more than the durometer A hardness of the silicone rubber to form the outer layer 2:

Durometer A hardness of silicone rubber to form inner layer - durometer A hardness of silicone rubber to form outer layer $\geq$ 10 (3).

In the silicone rubber hose H1 of the present embodiment, with the inner layer 1 and the outer layer 2 produced using silicone rubbers, which meet a certain range of physical properties, stretched in the axial direction of the hose, the braid (reinforcement material) 3 knitted into a cylindrical shape is also stretched in the same direction. Furthermore, when the whole hose is twisted in the circumferential direction, forces acting on intersecting knitting rows in two directions are balanced to retain the cylindrical shape of the hose.

As shown in Fig. 1, The silicone rubber hose H1 is formed integrally by knitting a cylindrical braid 3 between the inner layer 1 and the outer layer 2, creating a layered structure. The inner layer 1 and the outer layer 2 are produced using silicone rubbers the main component of which has excellent flexibility. The inner layer 1 is first extruded by a known extruder, the braid 3 described below is then knitted by a knitting machine (not shown) along the circumferential surface of the inner layer 1, and the outer layer 2 is further extruded on the outside of the braid 3 to form laminated layers.

The braid 3 knitted as described above is a reinforcement yarn or a reinforcement fiber such as polyester, nylon and aramid fiber, and the longitudinal knitting rows 3a extended in the axial direction of the silicone rubber hose H1 and the transverse knitting rows 3b extended in the circumferential direction of the silicone rubber hose H1 and intersecting with the longitudinal knitting rows 3a are elastically knitted. As directions in which these longitudinal knitting rows 3a and transverse knitting rows 3b are knitted, the longitudinal knitting rows 3a are parallel to the axial direction of the silicone rubber hose H1, and the transverse knitting rows 3b are knitted so as to be orthogonal to the longitudinal knitting rows 3a. Alternatively, as shown in Fig. 1, the longitudinal knitting rows 3a and the transverse knitting rows 3b are wound into a helix shape at a predetermined angle inclined from the axial direction of the silicone rubber hose H1 so that forces acting on the longitudinal knitting rows 3a and the transverse knitting rows 3b will be balanced with a twist of the silicone rubber hose H1. The intersection angle of the longitudinal knitting rows 3a and the transverse knitting rows 3b may be properly inclined to any inclined angle, in addition to the almost right angle shown.

In addition to the above inner layer 1, the above outer layer 2 and the reinforcement layer including the above braid 3, the silicone rubber hose H1 of the present embodiment may have other layers such as a third layer and a second reinforcement layer. As the method for connecting the silicone rubber hose H1 to other devices, e.g. a joint is considered in which the connection end of the silicone rubber hose H1 is fit on the circumferential surface of a nipple part, and the diameter of the hose is reduced by fastening the outside thereof with a fastening component such as a calking pipe, a hose clamp, a cap nut or a split holder to retain the hose. The present invention is, however, not limited thereto. The joint includes e.g. a hard synthetic resin and metal, and the nipple part is formed on the head side in the axial direction, and a connection means for connection to other devices is provided on the base side. Therefore, the hose can be connected to other devices for various purposes.

The silicone rubber hose H1 of the present embodiment has the structures and features as described above.

Therefore, when a tensile force acts in the axial direction of the silicone rubber hose H1 and when the whole hose is expanded with changes in the inner pressure, because the viscoelastic recovery rate and the permanent strain rate of the silicone rubber to form the outer layer 2 in the silicone rubber hose H1 are within the predetermined ranges, the inner layer 1 and the outer layer 2 in the silicone rubber hose H1 of the present embodiment have a strong force to restore the deformation of silicone rubbers. As a result, the diameter of the silicone rubber hose H1 is reduced by fastening with a fastening component to firmly retain the reinforcement material, and the reinforcement material can be prevented from detachment.

As shown in Fig. 1, when the knitted braid 3 particularly is used as the reinforcement material, it is obtained by knitting the braids 3 (reinforcement yarn, reinforcement fiber) in directions alternately changed to the longitudinal direction and the lateral direction, and thus the yarn can be dramatically prevented from detachment compared to the braid wound into a helix shape. Furthermore, even when the whole silicone rubber hose H1 is twisted in the circumferential direction, forces acting on the reinforcement material are balanced to retain the cylindrical shape of the silicone rubber hose H1. Consequently, the rigidity of the silicone rubber hose H1 against a twist is increased and the collapse of the silicone rubber hose H1 by the twist can be prevented.

In addition, when the diameter of the silicone rubber hose H1 is reduced with a liner put between the circumferential surface of the connection end of the silicone rubber hose H1 and a fastening component, the fastening component is not directly brought into contact with the circumferential surface of the connection end and is protected. Consequently, in even a hose produced using silicone rubbers having excellent flexibility, the tearing of the connection end can be prevented by a simple structure. The material of the liner can be e.g. a thermoplastic resin, rubber and metal. When the hose is used for particularly a food machine and medical equipment, a material having food sanitary safety and excellent heat resistance, such as a hard or semihard silicone rubber, a fluororesin or a nylon resin is preferably used.

Other resins, rubber-elastomer components and additives, for example, may be added to the silicone rubbers of the present embodiment as needed. Examples of other resins can include polyethylene-based resins such as high density polyethylene, medium density polyethylene, low density polyethylene and linear low density polyethylene (LLDPE), ethylene-based copolymer resins such as an ethylene-vinyl acetate copolymer resin, an ethylene-acrylate copolymer resin, an ethylene-methacrylate copolymer resin and an ethylene-styrene copolymer resin, homopolypropylene resins, block polypropylene resins, polybutene-based resins, poly-4-methyl-pentene-1-based resins, polystyrene-based resins, polyester-based resins, polyamide-based resins, polyphenylene ether-based resins, polyacetal-based resins, and polycarbonate-based resins. Examples of rubber-elastomer components can include natural rubber; polybutadiene; liquid polybutadiene; polyacrylonitrile rubber; acrylonitrile-butadiene copolymer rubber; partially hydrogenated acrylonitrile-butadiene copolymer rubber; ethylene-based rubber having an ethylene unit content of 70 mol% or more such as ethylene-propylene rubber, ethylene-butene rubber, ethylene-hexene rubber, ethylene-octene rubber; fluorine rubber; urethan rubber; isobutylene-isoprene copolymer rubber; non cross-linked olefin-based thermoplastic elastomer, partially cross-linked olefin-based thermoplastic elastomer, and perfectly cross-linked olefin-based thermoplastic elastomer.

Examples of additives can include an anti-aging agent, an antioxidant, an antiozonant, an ultraviolet absorber and a stabilizer such as a light stabilizer, a lubricant, a filler, a flame retardant, a high frequency processing aid, an antistatic agent, an internal release agent, a coloring agent, a dispersing agent, an anti-blocking agent, an anti-fogging agent and the like.

Examples of the above-described lubricant can include a wax, a higher alcohol, a fatty acid, a fatty acid metal salt, a fatty acid amide, a carboxylic acid ester, a phosphoric acid ester, a sulfonic acid metal salt, an acid ester metal salt, an acrylic-based resin, a fluorine-containing resin and silicone. Two or more of these may be used in combination.

Examples of the above-described wax can include petroleum waxes such as paraffin wax and microcrystalline wax; plant-based waxes such as rice wax; mineral-based waxes such as montan wax; and synthetic waxes such as polyethylene wax and low molecular weight polypropylene.

Examples of the above-described higher alcohol can include lauryl alcohol, myristyl alcohol, palmityl alcohol, stearyl alcohol, behenyl alcohol, oleyl alcohol, erucyl alcohol and 12-hydroxystearyl alcohol.

Examples of the above-described fatty acid can include lauric acid, palmitic acid, stearic acid, behenic acid, oleic acid, erucic acid, linoleic acid and ricinoleic acid.

Examples of the above-described fatty acid metal salt can include salts of metal such as Li, Na, Mg, Al, K, Ca, Zn, Ba and Pb of fatty acids such as lauric acid, palmitic acid, stearic acid, behenic acid, oleic acid, erucic acid, linoleic acid and ricinoleic acid. Specific examples of the fatty acid metal salt can include lithium stearate, sodium stearate, calcium stearate and zinc stearate.

Examples of the above-described fatty acid amide can include lauric acid amide, palmitic acid amide, stearic acid amide, oleic acid amide, erucic acid amide, methylene-bis-stearic acid amide, ethylene-bis-stearic acid amide, ethylene-bis-oleic acid amide and stearyl diethanol amide.

Examples of the above-described carboxylic acid ester can include esters of a carboxylic acid such as an aliphatic carboxylic acid (such as acrylic acid, crotonic acid, isocrotonic acid, fumaric acid, maleic acid, succinic acid or aconitic acid), a fatty acid (such as lauric acid, palmitic acid, stearic acid, behenic acid, oleic acid, erucic acid, linoleic acid or ricinoleic acid) or a an oxycarboxylic acid (such as lactic acid, malic acid, tartaric acid or citric acid), and an alcohol such as a fatty alcohol (such as myristyl alcohol, palmityl alcohol, stearyl alcohol, behenyl alcohol or 12-hydroxystearyl alcohol), an aromatic alcohol (such as benzyl alcohol, β-phenylethyl alcohol or phthalyl alcohol) or a polyhydric alcohol (such as glycerin, diglycerin, polyglycerin, sorbitan, sorbitol, propylene glycol, polypropylene glycol, polyethylene glycol, pentaerythritol or trimethylolpropane). Specific examples of the carboxylic acid ester can include glycerin monooleate, glycerin dioleate, polyethylene glycol monostearate and distearate citrate.

Examples of the above-described phosphoric acid ester can include a monoalkyl ester, a dialkyl ester and a trialkyl ester of phosphoric acid and a higher alcohol.

Examples of the above-described acrylic-based resin can include polymers having as the main unit a structural unit derived from an acrylic acid ester such as acrylic acid, methyl acrylate, ethyl acrylate, butyl acrylate or 2-ethylhexyl acrylate, and a structural unit derived from a methacrylic acid ester such as methacrylic acid, methyl methacrylate, ethyl methacrylate, butyl methacrylate or 2-ethylhexyl methacrylate. Specific examples of the acrylic-based resin can include an acrylic-based resin under the trade name of METABLEN manufactured by Mitsubishi Chemical Corporation and an acrylic-based resin under the trade name of Kane Ace manufactured by KANEKA CORPORATION.

Examples of the above-described sulfonic acid metal salt can include sodium stearylsulfonate, sodium laurylsulfonate, sodium dodecylbenzenesulfonate, sodium dodecylnaphthalenesulfonate, potassium stearylsulfonate, potassium laurylsulfonate, dibutyl sodium sulfosuccinate, di-2-ethylhexyl sodium sulfosuccinate, lauryl-2-sodium sulfosuccinate, and lauryl-2-sodium polyoxyethylene sulfosuccinate.

Examples of the above-described acid ester metal salt can include sulfuric acid ester salts such as sodium lauryl sulfate and potassium lauryl sulfate; and phosphoric acid ester salts such as sodium lauryl phosphate and potassium lauryl phosphate.

Examples of the above-described fluorine-containing resins can include polymers having as the main unit structural units derived from fluorine-containing olefins such as tetrafluoroethylene, hexafluoropropylene, fluoroalkyl ethylene and perfluoroalkyl vinyl ether; fluorine-containing alkylacrylates such as perfluoroalkylene acrylate and perfluoromethalkylene acrylate; and fluorine-containing compounds such as fluorine-containing alkylmethacrylate. Specific examples of the fluorine-containing resins can include polytetrafluoroethylene and perfluoro(polyoxypropylene ethyl ether).

The silicone rubber hose H1 of the present embodiment can be used as pipes for e.g. oil, various chemicals, air, various gases and water in the fields of various industrial vehicles such as car and construction machine vehicles, agricultural machine vehicles and railway vehicles; and the fields of e.g. various industrial and mining machines and ships such as machine tools, construction machines, agricultural machines, mining machines, industrial robots, chemical plants, painting machines, chemical transporting machines, food industry machines and hydraulic tools.

Specific examples of the silicone rubber hose H1 of the present embodiment can include car hoses such as filler hoses, evaporation hoses, fuel hoses, vapor emission hoses, intank-fuel hoses, power steering hoses, air conditioning hoses, radiator hoses, heater hoses, transmission oil cooler hoses, engine oil cooler hoses, brake hoses, turbocharger drain hoses, fuel injection hoses, air conditioning hoses, air duct hoses, air intake hoses, vacuum control hoses and air pollution control hoses; various industrial machine and industrial vehicle hoses such as oil hydraulic machine hoses, pneumatic machine hoses, center lubrication machine hoses, painting machine hoses, chemical plant hoses, solvent and chemical transferring hoses, hoses for transferring various liquefied gases, food related machine hoses, beverage related machine hoses, hoses for physical and chemical equipment, spinning machine hoses, packing machine hoses, printing machine hoses, power transmission hoses, water treatment equipment hoses, fluid element hoses, industrial robot hoses, industrial vehicle hoses, agricultural machine hoses, construction machine hoses, machine tool hoses, injection molding machine hoses, labor-saving machine hoses, air tool hoses such as air driver and air hammer, operating part hoses, air pressure/electric signal hoses, air pressure/signal hoses, equipment hoses requiring heat resistance and high insulation and high frequency properties, spot welder hoses, steam hoses, agriculture spray hoses, brewing hoses, submersible hoses, bandless oil hoses, gas tubing hoses, air brake hoses, gas station hoses, tank lorry hoses, rotary hoses and extinguisher hoses; medical equipment hoses such as various transfusion hoses and intake and exhaust hoses, and the like. In particular, it is preferably used as a milking hose.

According to the silicone rubber hose H1 of the present embodiment described above, the effects described below can be obtained. That is, in the silicone rubber hose H1 of the present embodiment, the diameter of the silicone rubber hose H1 is reduced by fastening with a fastening component to firmly retain the reinforcement material, and the reinforcement material can be prevented from detachment. Therefore, compared to conventional ones in which the reinforcement material easily comes out, high pressure resistance performance of the whole hose can be maintained to prevent the burst thereof. In addition, production costs can be lower than hoses in which adhesive properties between the inner layer and the outer layer is increased, for example, by applying a silicone rubber-based primer to the surface of the reinforcement material.

Furthermore, when the whole hose is twisted in the circumferential direction, forces acting on the reinforcement material are balanced to retain the cylindrical shape of the hose, and thus the rigidity of the hose against the twist can be increased to prevent the collapse of the hose by the twist. The hose also has high durability against washing with chemicals in milking and has a longer life. The hose can be used as the one with a much longer life than that of conventional products when it is used not only for milking but also in the industry in which washing is performed with chemicals.

(Second embodiment)

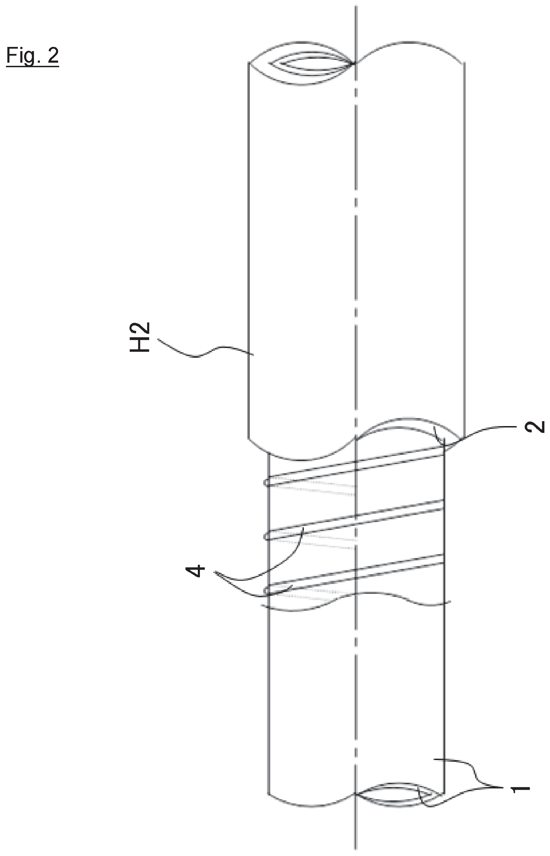

The second embodiment of the present invention will now be described with reference to Fig. 2. The silicone rubber hose H2 according to the second embodiment of the present invention (see Fig. 2) is formed integrally by coiling a wire rod 4 as a reinforcement material between the inner layer 1 and the outer layer 2 in a spiral shape to form a coil. The other structures are the same as in the first embodiment and thus the descriptions thereof are omitted.

This wire rod 4 is a hard wire rod including a hard fiber and a hard synthetic resin such as a metal wire of e.g. stainless which does not easily rust and a monofilament having one synthetic resin fiber, and is formed by winding the wire rod from a coil forming machine or a coil storage part on the circumference of the inner layer in a rest state.

With the inner layer and the outer layer produced using silicone rubbers, which meet a certain range of physical properties, stretched in the axial direction of the silicone rubber hose H2 of the present embodiment, the reinforcement material formed into a coil shape is also stretched in the same direction. Furthermore, when the whole hose is twisted in the circumferential direction, repulsive forces of the reinforcement material formed into a coil shape are balanced to retain the cylindrical shape of the hose.

Each embodiment of the present invention has been described above. It should be noted, however, that the present invention is not limited to each embodiment as described above, and various modifications can be made without departing from the gist thereof.

EXAMPLES

The present invention will now be described in more detail by way of Examples and Comparative Examples thereof. In Examples and Comparative Examples, the physical properties of a silicone rubber hose were measured by the following method.

1. Viscoelastic recovery rate /permanent strain rate

In Examples and Comparative Examples, the ratio of the viscoelastic recovery rate and the permanent strain rate of a silicone rubber to form a silicone rubber hose (viscoelastic recovery rate /permanent strain rate) was found by finding the elongation deformation amount, the stress residual deformation recovery amount and the residual strain amount by the following operations (i) to (iv) and calculating the viscoelastic recovery rate and the permanent strain rate by the following formula (1) and formula (2):

(i) a silicone rubber was press-formed at 160°C and then cured under an environment of 200°C for 2 hours to produce a sheet with a thickness of 0.5 mm,
(ii) a type 1 dumb-bell specimen (gauge length = 40 mm) described in JIS-K-6251 was produced from the produced sheet,
(iii) the produced specimen was subjected to the following operations using a tensile tester (Strograph R manufactured by TOYO SEIKI SEISAKU-SHO, LTD.),

(a) the specimen was extended at a crosshead speed of 500 mm/min to an elongation deformation rate of 100% (gauge length = 80 mm) (elongation deformation amount = 40 mm),
(b) the specimen was contracted at a crosshead speed of 500 mm/min to a tensile stress of 0 immediately after the specimen was extended, and
(c) the gauge length was measured when the tensile stress of the specimen was 0, a difference between the measured gauge length and a gauge length of 80 mm at an elongation deformation rate of 100% was found, and this value was regarded as the stress residual deformation recovery amount, and

(iv) the specimen with a tensile stress of 0 was left to stand at a temperature 23°C in a free state for 5 minutes immediately after the tensile stress became 0, and the gauge length was measured. A difference between the measured gauge length and a gauge length of 40 mm before the test was found, and this value was regarded as the residual strain amount:

Viscoelastic recovery rate = {(elongation deformation amount - stress residual deformation recovery amount - residual strain amount) /elongation deformation amount} $\times$ 100

and

Permanent strain rate = (residual strain amount/elongation deformation amount) $\times$ 100       (2).

2. Hardness

A pre-cured millable silicone rubber is press-formed at 160°C and then cured under an environment of 200°C for 2 hours to produce a sheet with a thickness of 2 mm. The durometer hardness (Duro-A) of the sheet was measured in accordance with JIS-K-6253.

3. Kink resistance

The formed silicone rubber hose (inner diameter 25.4 mm, outer diameter 35.5 mm) was wound around a 50 mm column body under an atmosphere of 23°C, and evaluated by the following criteria.

4. Presence of detachment

A pressure-resistant nipple was inserted into one end of the formed silicone rubber hose (inner diameter 25.4 mm, outer diameter 35.5 mm), which was tightened with a band to block, and air was continued to be fed inside the hose from another end. The state of the reinforcement material was observed when the hose was burst by the pressure from the inside of the hose, and evaluated by the following criteria.

5. Tear strength

A pre-cured millable silicone rubber was press-formed at 160°C and then cured under an environment of 200°C for 2 hours, and the cured product was measured in accordance with JIS-K-6251.

(Measurement results)

Each silicone rubber hose in Examples 1 to 6 and Comparative Examples 1 to 4 shown in Table 1 below was incorporated into an actual milking device in several dairy farms (Dairy farm A to Dairy farm D), and was monitored and evaluated in daily milking operations. These milking hoses were lent for monitoring without disclosing e.g. composition information, and all hoses were returned after completion of the monitoring period. It should be noted that the "hardness" in Table 1 indicates durometer A hardness. The "hose characteristics" in Table 1 indicate the ratio of the viscoelastic recovery rate and the permanent strain rate (the above-described formula (1)/formula (2)).

Examples 1 to 6 are silicone rubber hoses, in which the silicone rubber to form the inner layer has a "hardness" of 60 to 81 and a "tear strength" of 10 to 35 N/mm, and the silicone rubber to form the outer layer has a "hardness" of 38 to 63 and a "tear strength" of 34 to 56 N/mm, and the "hose characteristics" of the silicone rubber hoses are 2.2 to 2.8. In Comparative Example 1, the silicone rubber to form the inner layer had a "tear strength" of less than 5. In Comparative Example 2, the silicone rubber to form the outer layer had a "hardness" of less than 35, and the "hose characteristics" of the silicone rubber hose were less than 2.2. In Comparative Example 3, the silicone rubber to form the inner layer had a "hardness" of less than 55.

In addition, "1" in the "reinforcement method" in Table 1 indicates a silicone rubber hose produced by the reinforcement method described in the first embodiment, and "2" indicates a silicone rubber hose produced by the reinforcement method described in the second embodiment. It should be noted that Comparative Example 4 is a silicone rubber tube which is formed by a single silicone rubber layer and does not include a reinforcement material.

[Table 1]

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Physical properties of inner layer silicone rubber | Hardness | 70 | 60 | 81 | 70 | 70 | 70 | 70 | 60 | 48 | 70 |
| | Tear strength (N/mm) | 26 | 35 | 10 | 26 | 26 | 26 | 4 | 35 | 40 | 26 |
| Physical properties of outer layer silicone rubber | Hardness | 48 | 48 | 48 | 38 | 63 | 48 | 48 | 31 | 38 | |
| | Tear strength (N/mm) | 40 | 40 | 40 | 56 | 34 | 40 | 40 | 41 | 56 | |
| | Hose characteristics | 2.5 | 2.5 | 2.5 | 2.8 | 2.2 | 2.5 | 2.5 | 2.0 | 2.6 | - |
| Reinforcement method | | 1 | 1 | 1 | 1 | 1 | 2 | 1 | 1 | 1 | - |
| Difference in hardness (inner layer - outer layer) | | 22 | 12 | 33 | 32 | 7 | 22 | 22 | 29 | 10 | - |

Compared to conventional milking hoses, which are in a thick hose/tube shape, the silicone rubber hoses in Examples 1 to 6 were evaluated as being light and easily handled by monitoring evaluation about items related to handling of a milking device, such as flexibility and lightness.

Table 2 below shows the life evaluation results of the silicone rubber hoses in Examples 1 to 6 and the silicone rubber hoses/tube in Comparative Examples 1 to 4.

The "kink resistance" in Table 2 was evaluated by the following criteria:

∘: the outer diameter of a hose wound around the column body is 50% or more of the original outer diameter,

Δ: the outer diameter of a hose wound around the column body is 30% or more and less than 50% of the original outer diameter, and

x: the outer diameter of a hose wound around the column body is less than 30% of the original outer diameter.

The silicone rubber hoses/tube were used in 10 monitor dairy farms for a maximum of 4 months. When a hose wall was partly stiffened and deformed to affect the use of a hose, a hose wall was broken to cause leakage, and cracks appeared on e.g. a hose wall, it was judged that a hose could be no longer used and reached the life thereof, and the "washing durability" (life) in Table 2 was evaluated as x. When a hose did not have e.g. cracks and could be used but partly stiffened and deformed, the hose was evaluated as Δ. In addition, when a hose did not have the special observations as described above and was similar to the initial hose, the hose was evaluated as o. Of course, some hoses deteriorated before reaching 4 months.

The "Presence of detachment" in Table 2 was evaluated by the following criteria:

∘: the end of a reinforcement material does not move,

Δ: the end of a reinforcement material moves, and is between the connection end of a hose and the site tightened with a band, and

x: the end of a reinforcement material moves, and is away from the site tightened with a band when viewed from the connection end of a hose.

[Table 2]

| Hose per-formance | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| | Kink resistance | ○ | Δ | O | Δ | ○ | ○ | ○ | x | x | x |
| | Washing durability | ○ | ○ | Δ | ○ | ○ | ○ | x | ○ | Δ | x |
| | Presence of detachment | ○ | ○ | O | ○ | Δ | ○ | ○ | x | ○ | - |

A total of 60 hoses, one silicone rubber hose in each Example, were used for the monitors, and a total of 40 hoses/tube, one silicone rubber hose/tube in each Comparative Example, were used for the monitors. In the silicone rubber hoses/tube in Comparative Examples, there were samples evaluated as Δ and samples which reached the life thereof and were evaluated as x in any evaluation item a month after the monitoring started. In the silicone rubber hoses in each Example, meanwhile, samples evaluated as Δ appeared after 4 months, and there were not samples evaluated as x in the monitoring period for 4 months.

As shown in Table 2, it was found that the silicone rubber hoses in each Example had excellent kink resistance and a long life compared to the hoses in Comparative Examples 1 to 4. It was also found that unlike the hose in Comparative Example 2, in the silicone rubber hoses in each Example, the reinforcement material did not come out and a burst was prevented, and the hoses could be used in the milking operations over a long period of time and had high economic efficiency.

When a silicone rubber hose in each Example was used as a milking hose, deterioration is caused by a relationship with the usage form during washing operations. The inside of the milking hose is frequently washed after the use thereof to prevent contamination and generation of e.g. various germs. For this operation for washing the inside, a high temperature (60 to 80 degrees) washing liquid containing an acid or alkali is used. In order to increase washing efficiency, not only a washing liquid is allowed to continuously flow but also a washing liquid is forcibly and intermittently fed as splashes inside the hose together with air using negative pressure of a milking device during the washing operations. In addition, the silicone rubber hose is bent during the washing operations. Then, the high temperature washing liquid forcibly flowing as splashes inside the hose does not collide with the hose wall very much in a linear part of the silicone rubber hose, whereas the washing liquid vigorously collides with the inside of the hose wall in a bent part of the silicone rubber hose. Because of this, the silicone rubber hose is vigorously exposed to the high temperature washing liquid in a certain site. Therefore, the bent part easily deteriorates when washing this silicone rubber hose.

REFERENCE SIGN LIST

| | |
|---|---|
| 1 | Inner layer |
| 2 | Outer layer |
| 3 | Braid |
| 3a | Longitudinal knitting row |
| 3b | Transverse knitting row |
| 4 | Wire rod |
| H1, H2 | Silicone rubber hose |

**Claims**

1. A silicone rubber hose, which is produced using silicone rubbers having excellent stretchability and has a reinforcement material wound between the inner layer and the outer layer,

   wherein a durometer A hardness of a silicone rubber to form the inner layer is 55 to 85,
   a durometer A hardness of a silicone rubber to form the outer layer is 35 to 65,
   at least one of the silicone rubber to form the inner layer or the silicone rubber to form the outer layer has a tear strength (Sa) of 5 to 60 N/mm measured in accordance with JIS-K-6252, and
   a ratio of a viscoelastic recovery rate defined by a formula (1) below and a permanent strain rate defined by a formula (2) below (viscoelastic recovery rate /permanent strain rate) is 2.2 or more in the silicone rubber to form the outer layer:

   Viscoelastic recovery rate = { (elongation deformation amount - stress residual deformation recovery amount - residual strain amount) /elongation deformation amount} × 100     (1)

   and

   Permanent strain rate = (residual strain amount/elongation deformation amount) × 100     (2).

2. The silicone rubber hose according to claim 1, which meets a formula (3) below:

Durometer A hardness of silicone rubber to form inner layer - durometer A hardness of silicone rubber to form outer layer $\geq 10$    (3).

3. The silicone rubber hose according to claim 2, wherein the silicone rubber inner layer extruded by an extruder, the reinforcement material which is knitted into a cylindrical shape along a circumferential surface of the inner layer by a knitting machine and formed into a layer, and the silicone rubber outer layer extruded on an outside of the reinforcement material are laminated, and longitudinal knitting rows of the knitted reinforcement material are wound into a helix shape at a predetermined angle inclined from an axial direction of the silicone rubber hose, and transverse knitting rows are wound into a helix shape so as to be orthogonal to the longitudinal knitting rows.

4. The silicone rubber hose according to claim 2, wherein the silicone rubber inner layer extruded by an extruder, the reinforcement material which is wound into a helix shape along a circumferential surface of the inner layer to form a coil shape, and the silicone rubber outer layer extruded to an outside of the reinforcement material are laminated.

5. The silicone rubber hose according to any one of claims 1 to 4, which is used for milking.

Fig. 1

Fig. 2

H2

2

4

1

## INTERNATIONAL SEARCH REPORT

| International application No. |
| --- |
| **PCT/JP2024/000045** |

**A.    CLASSIFICATION OF SUBJECT MATTER**

*F16L 11/10*(2006.01)i; *A01J 5/00*(2006.01)i; *B32B 1/08*(2006.01)i; *B32B 25/20*(2006.01)i
FI:    F16L11/10 A; B32B1/08 B; B32B25/20; A01J5/00

According to International Patent Classification (IPC) or to both national classification and IPC

**B.    FIELDS SEARCHED**

Minimum documentation searched (classification system followed by classification symbols)

F16L11/10; A01J5/00; B32B1/08; B32B25/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2011-236270 A (THE YOKOHAMA RUBBER CO., LTD.) 24 November 2011 (2011-11-24)<br>entire text, all drawings | 1-5 |
| A | JP 2007-292303 A (TOKAI RUBBER INDUSTRIES, LTD.) 08 November 2007 (2007-11-08)<br>entire text, all drawings | 1-5 |
| A | JP 2007-292302 A (TOKAI RUBBER INDUSTRIES, LTD.) 08 November 2007 (2007-11-08)<br>entire text, all drawings | 1-5 |
| A | JP 2003-120864 A (TOKAI RUBBER INDUSTRIES, LTD.) 23 April 2003 (2003-04-23)<br>entire text, all drawings | 1-5 |
| A | JP 2002-220499 A (SUMITOMO CHEM CO., LTD.) 09 August 2002 (2002-08-09)<br>entire text, all drawings | 1-5 |

✓ Further documents are listed in the continuation of Box C.    ✓ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 January 2024** | **06 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/000045** |

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2002-168379 A (BRIDGESTONE FLOWTECH CORP.) 14 June 2002 (2002-06-14) entire text, all drawings | 1-5 |
| A | JP 2004-285299 A (SUMITOMO CHEM CO., LTD.) 14 October 2004 (2004-10-14) entire text, all drawings | 1-5 |

Form PCT/ISA/210 (second sheet) (July 2022)

## INTERNATIONAL SEARCH REPORT
### Information on patent family members

International application No.

**PCT/JP2024/000045**

| Patent document cited in search report | Publication date (day/month/year) | Patent family member(s) | Publication date (day/month/year) |
|---|---|---|---|
| JP 2011-236270 A | 24 November 2011 | (Family: none) | |
| JP 2007-292303 A | 08 November 2007 | US 2007/0227607 A1 entire text, all drawings<br>FR 2899303 A1<br>CN 101070936 A | |
| JP 2007-292302 A | 08 November 2007 | US 2007/0227605 A1 entire text, all drawings<br>FR 2899306 A1<br>CN 101046264 A | |
| JP 2003-120864 A | 23 April 2003 | EP 1302511 A2 entire text, all drawings | |
| JP 2002-220499 A | 09 August 2002 | (Family: none) | |
| JP 2002-168379 A | 14 June 2002 | (Family: none) | |
| JP 2004-285299 A | 14 October 2004 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010054052 A
- JP 2004285299 A
- JP 2001317662 A